(19) Europäisches Patentamt
European Patent Office
Office européen des brevets

(11) Publication number: 0 324 965
A2

# (12) EUROPEAN PATENT APPLICATION

(21) Application number: 88121389.6

(51) Int. Cl.4 C08G 61/08

(22) Date of filing: 21.12.88

(30) Priority: 24.12.87 US 137840

(43) Date of publication of application:
26.07.89 Bulletin 89/30

(84) Designated Contracting States:
BE DE ES FR GB IT NL SE

(71) Applicant: HERCULES INCORPORATED
Hercules Plaza
Wilmington Delaware 19894(US)

(72) Inventor: Leach, Douglas Robert
16 Helios Court / Treetop
Newark Delaware 19711(US)

(74) Representative: Lederer, Franz, Dr. et al
Van der Werth, Lederer & Riederer
Patentanwälte Lucile-Grahn-Strasse 22
D-8000 München 80(DE)

## (54) Metathesis polymerized terpolymers.

(57) This invention teaches the preparation of crosslinked terpolymers of dicyclopentadiene, tricyclopentadiene and tetracyclododecene or alkyl/alkylene derivatives of tetracyclododecene, which have significantly higher glass transition temperatures than that of dicyclopentadiene homopolymers, and which concomitantly exhibit significantly improved values of impact resistance over that known for copolymers of dicyclopentadiene.

EP 0 324 965 A2

## Metathesis Polymerized Terpolymers

It is known that a high modulus, high impact resistant thermoset homopolymer of poly(dicyclopentadiene) (PDCPD) can be prepared from ring-opening polymerization of dicyclopentadiene in the presence of a metathesis catalyst. Such a process is described, for example, in U.S. Patent No. 4,400,340 (Klosiewicz). The polymer has limited use in many applications, however, due to its relatively low glass transition temperature (Tg) of approximately 120° C. Thus, the maximum use temperature of the polymer is limited to about 80 to 90° C, since the polymer begins to soften at temperatures above this range.

It has been proposed to overcome such a shortcoming by copolymerizing dicyclopentadiene (DCPD) with other strained-ring cycloolefins in the presence of a metathesis catalyst. For example, U.S. Patent No. 4,689,380 (Nahm) teaches that copolymers can be prepared from ring-opening metathesis catalyst copolymerization of DCPD with norbornene-type comonomers such as tetracyclododecene (1,4,5,8-dimethano-1,4,4a,5,8,8a-octahydronaphthalene (DMON)). Copolymers prepared in such a process are reported to have significantly higher values of Tg and heat distortion temperature (HDT) relative to PDCPD, therein providing polymers with a higher maximum use temperature and greatly increased scope of products manufactured therefrom. It is also taught in U.S. Patent No. 4,703,098 (Matlack) that copolymers prepared from ring-opening metathesis catalyst copolymerization of DCPD with dicyclopentadiene oligomers, for example, tricyclopentadiene and higher oligomers, result in products with significantly higher Tg and HDT values relative to PDCPD.

It is believed that by copolymerizing dicyclopentadiene with such comonomers an increase in Tg and HDT is caused by decreased mobility of the polymer chains due to the presence of longer, more rigid norbornene-type monomer and oligomer molecules relative to dicyclopentadiene. It is for this same reason, however, that the impact resistance of polymers prepared by such processes is significantly reduced compared to that of dicyclopentadiene homopolymer. Thus, a major shortcoming of polymers prepared as such is that a gain in Tg and HDT values is typically accompanied by corresponding reduced values of impact resistance resulting in brittle polymers of limited utility.

It is, therefore, an object of this invention to provide polymers comprising dicyclopentadiene which exhibit significantly improved values of Tg and HDT over heretofore known in the art for dicyclopentadiene homopolymer, and which concomitantly exhibit significantly improved values of impact resistance over that known for copolymers of dicyclopentadiene.

In accordance with the instant invention , it has now been found that crosslinked terpolymers of dicyclopentadiene with tricyclopentadiene and tetracyclododecene or derivatives thereof can be prepared which have the above-mentioned desirable properties of significantly increased Tg and HDT, relative to dicyclopentadiene homopolymer, and significantly improved values of impact resistance, relative to that exhibited by copolymers comprising dicyclopentadiene. The terpolymers, according to this invention, comprise from about 20 to about 80% by weight, based on total terpolymer weight, of repeating units derived from dicyclopentadiene, from about 10 to about 50% by weight of repeating units derived from tricyclopentadiene, and from about 10 to about 50% by weight of repeating units derived from tetracyclododecene or derivatives of tetracyclododecene, having the general formula

1)

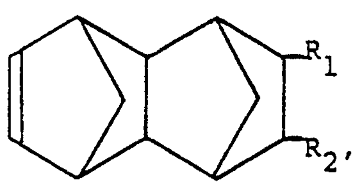

wherein $R_1$-$R_2$ denote the same or different hydrogen atoms or lower alkyl and alkylene groups having from 1 to 10 carbon atoms. Preferred terpolymers are those having from about 20 to about 80% by weight dicyclopentadiene, from about 10 to about 40% by weight tricyclopentadiene, and from about 10 to about 40% by weight tetracyclododecene or tetracyclododecene derivative. Most preferred are those terpolymers having from about 45 to about 70% by weight dicyclopentadiene, from about 20 to about 35% by weight tricyclopentadiene, and from about 10 to about 30% by weight tetracyclododecene. The terpolymers, according to this invention, can be prepared by substantially any technique known in the art for the preparation of dicyclopentadiene homopolymers. Thus, the reaction is carried out under the influence of a tungsten or molybdenum catalyst compound activated via an alkyl aluminum compound.

A preferred method for carrying out the terpolymerization is taught, for example, in U.S. Patent No.

4,400,340 (Klosiewicz). In such a process, known as reaction injection molding (RIM), a plurality of reactive liquid streams, usually two or three streams, comprising a metathesis catalyst system are mixed together, the combined streams then being injected into a mold where they quickly set up into a solid polymerized mass. One of these streams contains a metathesis catalyst component, preferably a tungsten halide or tungsten oxyhalide complex dissolved in a non-polymerized three-part comonomer mixture of dicyclopentadiene-tricyclopentadiene- tetracyclododecene/tetracyclododecene derivative. Another stream contains the alkylaluminum activator compound, preferably comprising an alkylaluminum iodide, and a reaction rate moderator to delay catalyst activation dissolved in the three part comonomer mixture. The streams are mixed and immediately injected into a mold of the desired shape where the terpolymerization reaction takes place. The reaction rate moderator delays the onset of the reaction for the time required to transfer the entire mix into the mold, following which reaction is substantially completed with about one-half minute or less.

Dicyclopentadiene comonomer useful in this invention can be obtained commercially from any convenient source. If desired, such commercially obtained dicyclopentadiene can be further purified to prevent impurities from inhibiting the terpolymerization reaction. Such a purification method is described, for example, in U.S. Patent No. 4,568,660 (Klosiewicz).

A mixture of dicyclopentadiene and tricyclopentadiene (sometimes referred to as cyclopentadiene trimer) can be conveniently and inexpensively prepared in situ. In such a process, described, for example, in U.S. Patent No. 4,703,098 (Matlack), a mixture comprising the desired proportions of dicyclopentadiene and tricyclopentadiene and higher oligomers of dicyclopentadiene, for example, tetra-oligomers, can be prepared by heating dicyclopentadiene under proper conditions. For purposes of this invention, it is not necessary to effect any separation of higher oligomers from the mixture, however, it is preferred that tricyclopentadiene comprise the predominant portion of the higher oligomers present in the mixture. Thus, an oligomeric mixture comprising at least 85% tricyclopentadiene with a small amount of the tetra-oligomer and negligible amounts of higher oligomers is preferred, with 90% tricyclopentadiene most preferred.

Tricyclopentadiene prepared as described above usually exists in both symmetrical and unsymmetrical isomeric forms having the following respective structural formulas 2) and 3):

2) 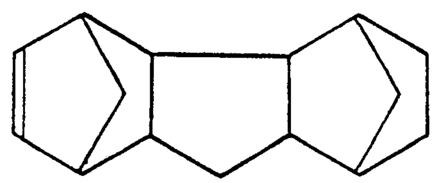 ,

3) 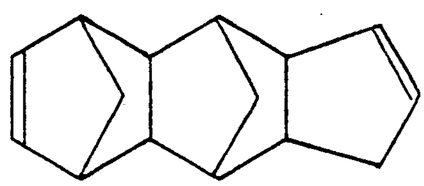 ,

As can be seen from the above formulas, a major difference between the two isomers is that the symmetrical version contains two terminal norbornene-type unsaturated moieties, whereas the unsymmetrical version contains one terminal norbornene-type unsaturated moiety and a cyclopentene-type unsaturated moiety. For purposes of this invention, however, it is not necessary to effect separation of the two isomers, as both are equally useful in the preparation of the crosslinked terpolymers of this invention. Thus, both the terminal norbornene-type and cyclopentene-type unsaturated moieties present in the unsymmetrical comonomer isomer of formula 3) can undergo ring-opening metathesis catalyst copolymerization with the norbornene-type unsaturated moieties present in both the dicyclopentadiene and tetracyclododecene comonomers as well as with the cyclopentene-type unsaturated moiety also present in the dicyclopentadiene comonomer to form the crosslinked terpolymers of the present invention.

Further, it is not critical in any way to the instant invention that tricyclopentadiene be provided via a dicyclopentadiene-tricyclopentadiene oligomeric mixture prepared by heat treatment in situ as described above. Should a source of isolated tricyclopentadiene comonomer, symmetrical or unsymmetrical isomers or a mixture of both, be available, such comonomer can be blended into a mixture with dicyclopentadiene, or with dicyclopentadiene and tetracyclododecene (or tetracyclododecene derivative) to form the three-part comonomer mixture; the order of addition of comonomers to the mixture is not critical in any way to the preparation of the terpolymers of this invention.

Tetracyclododecene comonomer (or 1,4,5,8-dimethano-1,4,4a,5,8,8a-octahydronaphthalene, sometimes referred to as DMON) useful in this invention can be prepared by any suitable method known in the art, for example, such as described in U.S. Patent Nos. 4,568,660 (Klosiewicz) and 4,320,239 (Schneider). In such processes norbornene is reacted with cyclopentadiene to produce tetracyclododecene which can be further purified by distillation. Tetracyclododecene derivatives useful in this invention can be prepared, as further described in U.S. Patent No. 4,320,239, by reacting a cyclopentadiene with a norbornene derivative, for example, a monoalkyl, monoalkylene, dialkyl, dialkylene, or monoalkyl-monoalkylene norbornene derivative. As previously stated, the preparation of all such tetracyclododecene comonomers is well known and will be readily apparent to those skilled in the art.

The significant improvement in the terpolymers of this invention is the improved glass transition temperature (Tg) and heat distortion temperature (HDT) of such terpolymers compared to that of cyclopentadiene homopolymer, while concomitantly maintaining significantly improved values of impact resistance relative to that of copolymers of dicyclopentadiene heretofore known in the art. Dicyclopentadiene homopolymer exhibits a Tg value on the order of about 120° C, and HDT of about 90° C, and a notched izod impact strength of about 9 ft./lbs/in.. Copolymers prepared from dicyclopentadiene with either tetracyclododecene or tricyclopentadiene, as taught, for example, in U.S. Patent Nos. 4,689,380 (Nahm) and 4,703,098 (Matlack), respectively, exhibit increased Tg values of from about 130° C to about 165° C and HDT's of from about 90° C to 140° C. However, the impact strength of such copolymers correspondingly decreases, relative to the homopolymer, to the order of from about 1-8 ft. lbs. in. to about 2-4 ft. lb. in. In comparison, crosslinked terpolymers of this invention exhibit Tg values of from about 145° C to about 170° C and HDT values of from about 115° C to 135° C while simultaneously maintaining notched izod impact strength within the range of from about 2-4 ft./lb/in. to about 3-5 ft.lb/in.

Other compounds known in the art to improve impact strength of polymers comprising dicyclopentadiene repeating units can, of course, be incorporated into the terpolymers of the present invention. For example, a hydrocarbon elastomer such as butyl rubber, polyisoprene, polybutadiene, polyisobutylene, styrene-butadiene block and random rubbers, ethylene-propylene copolymers, ethylene-propylene-diene terpolymers, styrene-butadiene-random copolymer rubber and the like can be formulated with the three-part comonomer mixture prior to terpolymerization. Such elastomers can comprise from about 3% to about 10% by weight, based on the total terpolymer weight. The amount of elastomer used is determined by its molecular weight and is limited by the maximum viscosity tolerable in the resultant reactive streams. The viscosity must not be so high as to interfere with rapid mixing of the reactive streams. The elastomer can be added to one or all of the reactive streams, but is preferably dissolved in all streams since mixing of the streams takes place most readily when all have essentially the same viscosity.

Reinforcement of the instant terpolymers to increase their impact resistance relative to dicyclopentadiene homopolymer can also be accomplished by addition of fibrous reinforcing materials. Preferred reinforcement materials include organic or inorganic fibrous materials, in particular glass. The fiber can be either chopped as a staple fiber or in a continuous mat form. It is sometimes preferred to use a low viscosity reaction stream which can readily flow around and in among the fibers. For this reason, elastomer is frequently not included in the reactant streams in the fiber-filled embodiment.

The following examples more fully illustrate preferred embodiments of the instant invention. It is not intended, however, that this invention be limited in any way thereto.

Preparation 1

Preparation of Catalyst and Activator

A 0.5 molar solution of tungsten catalyst is prepared by weighing, under nitrogen, 19.80 g (0.05 moles) of $WCl_6$ into a 200 ml pop bottle containing a stirring bar. The tungsten is then slurried in 90 ml toluene that has been previously distilled from a sodium/potassium alloy under nitrogen. Tert-butanol (0.925 g, 0.0125 moles) dissolved in 5 ml toluene is added, and the mixture stirred for one hour while sparging with nitrogen. Nonylphenol (11.05 g, 0.05 moles) dissolved in 5 ml toluene is next added, and the mixture stirred for one hour while again sparging with nitrogen. Acetylacetone (10.0 g, 0.100 moles) is then added by syringe and the mixture stirred overnight while further sparging with nitrogen to remove HCl gas. Toluene is then added to restore the volume of the solution to its original level resulting in a 0.05 molar solution.

A 1.97 molar alkylaluminum activator solution is prepared by mixing tri-n-octylaluminum (155.8 g, 0.425 moles) and dioctylaluminum iodide (28.5 g, 0.0250 moles) in a capped and sparged pop bottle under nitrogen. Dimethoxyethyl ether (diglyme) (67.1 g, 0.500 moles) is then added slowly by syringe to the alkyl mixture.

Examples I to VI

## Terpolymerization

Terpolymers of dicyclopentadiene, tricyclopentadiene and tetracyclododecene are prepared in accordance with the following procedure. Mixtures of comonomers are prepared according to the proportions indicated in Table 1 below in capped bottles that have been previously sparged with nitrogen. Alkylaluminum activator (0.385 ml, 0.681 mm) is then added to 60 ml monomer mixture by syringe. After mixing the solution, 0.454 ml (0.227 mm) tungsten catalyst solution is added by syringe and the contents of the bottle shaken several times. The contents of the bottle are then syringed into a flat, upright mold (5″ x 5″ x 1.8″ thick) and the mold placed in an oven for 10 minutes at 60 °C to accelerate the terpolymerization reaction. The mold is then removed from the oven and a flat, hard plaque is removed therefrom for testing. Results are recorded in Table 1 below.

TABLE 1

| | Examples | | | | | |
|---|---|---|---|---|---|---|
| | I | II | III | IV | V | VI |
| a) Terpolymer composition | | | | | | |
| Dicyclopentadiene (wt %) | 63 | 59 | 56 | 67 | 65 | 63 |
| Tricyclopentadiene (wt %) | 27 | 26 | 24 | 25 | 23 | 21 |
| Tetracyclododecene (wt %) | 10 | 15 | 20 | 8 | 12 | 16 |
| b) Terpolymer properties | | | | | | |
| HDT, °C* | 123 | 117 | 115 | 126 | 124 | 120 |
| c) Mechanical properties | | | | | | |
| Flex modulus (kpsi) | 344 | 364 | 325 | 338 | 350 | 355 |
| Flex strength (kpsi) | 14.0 | 15.4 | 15.8 | 14.2 | 14.8 | 15.1 |
| Tensile modulus (kpsi) | 275 | 272 | 280 | 252 | 259 | 264 |
| Tensile strength (kpsi) | 7.9 | 8.1 | 8.1 | 7.7 | 7.8 | 8.2 |

*ASTM D-648.

Examples VII to XII

## Terpolymerization Via Reaction Injection Molding

The following examples describe preparation of preferred terpolymers of this invention by Reaction Injection Molding (RIM). Samples of such terpolymers are made using a standard RIM machine supplied by the Accuratio Co., Jeffersonville, Indiana. The procedure for molding samples is as follows: First, two monomer storage tanks attached to the machine (tanks A and B) are sparged with nitrogen. A mixture of comonomers and elastomer in proportions as indicated below in Table 2 is next added to each tank. If desired, solid fillers such as glass fiber or wollastonite can be added to each tank at this point. Alkylaluminum activator solution, as prepared in Example 1 above, is then added in sufficient amount to tank A such that the resulting concentration of activator is 0.0213 molar. Next, sufficient tungsten catalyst solution, as prepared in Example 1, is added to tank B such that the resulting concentration of catalyst is 0.0071 molar. All transfers of chemical reagents, catalyst, etc. are done and all materials handled in a way to insure against oxygen or moisture contamination of the system. The mixtures in tanks A and B are then thoroughly blended.

The mixing of streams from tanks A and B, respectively, is accomplished using a standard inpingement type RIM mixhead and by passing both streams through orifices 0.032 inches in diameter at a flow rate of approximately 80 ml/second at a pumping pressure of approximately 1,000 psi. The ratio of activator comonomer solution mixed with the catalyst/comonomer solution is 1:1. The resulting mixture of streams from tanks A and B flows directly into a mold heated to between 50 to 60 °C. Approximately 10 to 30 seconds after the mold is filled, the terpolymerization reaction is completed. The mold is then opened and a plaque sample (10" x 10" x 1/8") is removed for testing. Results are recorded in Table 2 below.

TABLE 2

| | Examples | | | | | |
|---|---|---|---|---|---|---|
| | VII | VIII | IX | X | XI | XII |
| a) Terpolymer composition | | | | | | |
| Dicyclopentadiene (wt %) | 65 | 52 | 50.7 | 49 | 50.8 | 67 |
| Tricyclopentadiene (wt %) | 20 | 25 | 25 | 28 | 20 | 30 |
| Tetracyclododecene (wt %) | 12 | 20 | 20 | 20 | 25 | 0 |
| EDPM (wt %)* | 3 | 3 | 4.4 | 3 | 4.3 | 3 |
| b) Terpolymer properties | | | | | | |
| Tg, °C | 147 | 157 | 167 | 172 | 158 | 175 |
| HDT, °C** | 119 | 124 | 120 | 133 | 115 | 133 |
| c) Mechanical properties | | | | | | |
| Flex modulus (kpsi) | 357 | 367 | 326 | 330 | 341 | 348 |
| Flex strength (kpsi) | 15.3 | 15.6 | 13.0 | 12 | 13.2 | 14 |
| Tensile modulus (kpsi) | 263 | 272 | 260 | 245 | 300 | 265 |
| Tensile strength (kpsi) | 8.0 | 8.1 | 7.6 | 7.2 | 7.4 | 7.9 |
| Tensile elongation (kpsi) | 26 | 24 | 29 | 52 | 60 | 22 |
| Notched Izod Impact (ft.-lb./in.) | 2.7 | 2.9 | 3.2 | 2.4 | 3.1 | 1.8 |
| Plate impact (ft.-lb.) | - | 16.1 | 12.8 | 11 | 8.3 | - |

*Ethylene-propylene-diene rubber.

**ASTM D-648.

## Claims

1. A metathesis catalyst ring-opening copolymerizable composition comprising from about 20% to about 80% by weight, based on total terpolymer weight, or repeating units derived from dicyclopentadiene, from about 10% to about 50% by weight of repeating units derived from tricyclopentadiene, and from about 10% to about 50% by weight of repeating units derived from tetracyclododecene or derivatives of tetracyclododecene, having the general formula:

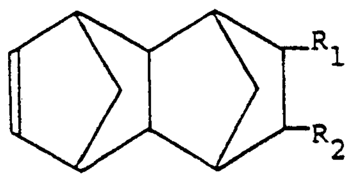

wherein $R_1$-$R_2$ denote the same or different hydrogen atoms or lower alkyl and alkylene groups having from 1 to 10 carbon atoms.

2. A crosslinked terpolymer comprising from about 20% to about 80% by weight, based on total terpolymer weight, of repeating units derived from dicyclopentadiene, from about 10% to about 50% by weight of repeating units derived from tricyclopentadiene, and from about 10% to about 50% by weight of repeating units derived from tetracyclododecene or derivatives of tetracyclododecene, having the general formula:

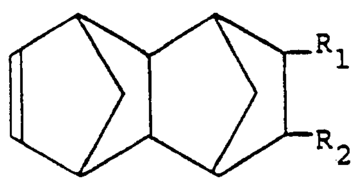

wherein $R_1$-$R_2$ denote the same or different hydrogen atoms or lower alkyl and alkylene groups having from 1 to 10 carbon atoms.

3. A crosslinked terpolymer as claimed in claim 2 which comprises from about 20% to about 80% by weight of repeating units derived from dicyclopentadiene, from about 10% to about 40% by weight of repeating units derived from tricyclopentadiene, and from about 10% to about 40% by weight of repeating units derived from tetracyclododecene or derivatives of tetracyclododecene.

4. A crosslinked terpolymer as claimed in claim 2 which also comprises a hydrocarbon elastomer in an amount of from about 3% to about 10% by weight, based on the total terpolymer weight.

5. A crosslinked terpolymer as claimed in claim 3 which also comprises a hydrocarbon elastomer in an amount of from about 3% to about 10% by weight, based on the total terpolymer weight.

6. A process for producing a crosslinked terpolymer comprising reacting in the presence of a metathesis catalyst from about 20% to about 80% by weight, based on total terpolymer weight, or repeating units derived from dicyclopentadiene, from about 10% to about 50% by weight of repeating units derived from tricyclopentadiene, and from about 10% to about 50% by weight of repeating units derived from tetracyclododecene or derivatives of tetracyclododecene, having the general formula:

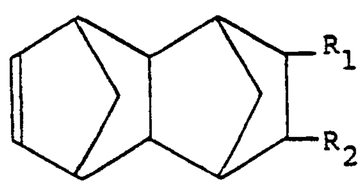

wherein $R_1$-$R_2$ denote the same or different hydrogen atoms or lower alkyl and alkylene groups having from 1 to 10 carbon atoms.